# EUROPEAN PATENT APPLICATION

(11) **EP 1 101 971 A1**
(43) Date of publication of application: **23.05.2001**
(21) Application number: 00309425.7
(22) Date of filing: 26.10.2000
(51) Int. Cl.: F16D 66/02

(54) **Brake lining wear detector**

(30) Priority: 19.11.1999 JP 32920399
(71) Applicant: Tokyo-Buhin Kogyo Co., Ltd., Machida-shi, Tokyo (JP)
(72) Inventor: Ohba, Mitsuyoshi, c/o Tokyo-Buhin Kogyo Co., Ltd., Machida-shi, Tokyo (JP); Kaneko, Junya, c/o Tokyo-Buhin Kogyo Co., Ltd., Machida-shi, Tokyo (JP); Yoshida, Shin, c/o Tokyo-Buhin Kogyo Co., Ltd., Machida-shi, Tokyo (JP); Araki, Tomohiro, c/o Tokyo-Buhin Kogyo Co., Ltd., Machida-shi, Tokyo (JP)
(74) Representative: Wolff, Francis Paul

(57) **Abstract**

On a brake shoe (20), mounted is an abrasion detection head (10) which includes a closed-end chamber. This closed front end is opened by abrasion with a brake drum (25) during the actuation of the brake if the wear of lining (23) reaches a critical abrasion point (23L). A pneumatic pressure is provided in the closed-end chamber of the abrasion detection head (10) from a pneumatic pressure supply circuit (30), which includes an orifice (32). Furthermore, a pressure switch (41), which detects a decrease in the pneumatic pressure of the closed-end chamber, is provided on a branch line (35) of the pneumatic pressure supply circuit (30). When the front end of the abrasion detection head (10) is worn and torn, the line pressure decreases. The pressure switch (41) detects this pressure decrease, and an alarming device (50) takes a warning action such as lighting a warning lamp (52).

## Description

The present invention relates to a brake-lining abrasion detector which detects that the brake lining of a friction brake such as a drum brake or a disc brake has worn out by an amount greater than a predetermined amount, or detects that the abrasion of the brake-lining has reached, for example, an abrasion limit.

### BACKGROUND OF THE INVENTION

A friction brake such as a drum brake or a disc brake operates to provide a frictional resistance for braking by pushing a brake lining ( brake pad ) onto a brake member such as a brake drum or disk ( rotor ) which rotates. Because of the friction generated for braking, the brake lining gradually wears out. If the friction brake is used continually beyond the abrasion limit of the brake lining, then the friction brake will become ineffective. Therefore, various types of brake-lining abrasion detectors are designed to detect the condition of the brake lining which may have reached a predetermined abrasion limit and to alert the driver accordingly.

As such a detector, there is an abrasion detector which detects directly the abrasion of the brake lining. An example is described in Japanese Laid-Open Patent Publication No. H10 ( 1998 ) -184748, which is disclosed also by the applicant of the present invention. This detector comprises a detection tool which extends from the back of a brake lining toward a brake drum. This detection tool includes a looped metal wire at the front end thereof, and this wire is connected to a warning circuit. As the abrasion of the brake lining progresses, the front end of the detection tool comes into contact with the brake drum. When the front end of the detection tool is scraped or broken off, the internal metal wire, which is located at the front end and connected to the warning circuit, is also cut off. This breakage is designed to correspond to the abrasion limit of the brake lining and is detected by the detector as a change in the electric current or the voltage applied to the circuit. In response, the detector warns the driver of the condition that the brake lining has reached its abrasion limit.

There is another type of detector which detects the abrasion of the brake lining indirectly. For example, in a drum brake, the abrasion of the brake lining is detected from the length of the stroke ( or the positional shift ) of the piston which drives a wheel cylinder to swing the brake shoes. This detection method utilizes a change in the distance which the piston travels because the distance increases as the brake lining wears out. Also, in a drum brake with an automatic adjust mechanism, the positions of the stroke ends of the piston shift gradually in correspondence to the abrasion of the brake lining. Therefore, the amount of the piston movement or the shift of the stroke ends is monitored to determine whether the condition of the brake lining has reached the abrasion limit or not. When the condition is determined to have reached the abrasion limit, a warning is given to the driver.

Conventionally, the electrical circuit of the brake-lining abrasion detector, which circuit detects the abrasion of the brake lining and sends an electrical signal, is placed near the wheel, which vibrates and generates heat while the vehicle drives. This condition presents a problem that the electrical wiring of the circuit may be cut off, or that a limit switch used in the circuit may be damaged. To prevent such problems, the circuit must be designed to satisfy the need of high vibration and environmental resistance. Therefore, it is difficult to reduce the production cost of the detector. Furthermore, the above mentioned detector which detects the abrasion limit directly through the cutting of the electric circuit may give a mis-leading warning when it malfunctions. On the other hand, if the electric circuit experiences a short circuit, then even though the wear of the brake lining reaches the abrasion limit, the detector cannot detect this condition correctly. Moreover, the above mentioned detector which detects the abrasion of the brake lining indirectly, for example, from the movement or position of the wheel piston is not so reliable. Because the detection is based not on the exact abrasion of the brake lining, the system must permit a certain range of errors related to the indirect detection. Also, the system is complex in construction and costly to produce.

### SUMMARY OF THE INVENTION

The present invention is conceived to solve these problems. It is an object of the present invention to provide a brake-lining abrasion detector which has a high reliability but can be constructed from simple components with a relatively low cost.

The present invention provides a brake-lining abrasion detector for a friction brake ( for example, the drum brake 5 described in the following section ) which comprises a lining member ( for example, the brake shoe 20) and a brake member ( for example, the brake drum 25). The lining member is provided with a brake lining, which is pushed onto the brake member when the friction brake is actuated. The brake-lining abrasion detector comprises an abrasion detection member ( for example, the abrasion detection head 10 described in the following section ), which includes a closed-end chamber extending from a rear end thereof toward a closed front end. The abrasion detection member is mounted on the lining member, extending from the rear side of the brake lining toward the surface of the brake lining that meets the brake member. The brake-lining abrasion detector further comprises pneumatic pressure supply meanswhich provides a pneumatic pressure in the closed-end chamber through the rear end of the abrasion detection member and pressure detecting means which detects the pneumatic pressure in the closed-end chamber. When the brake lining having been worn out by an amount more than a predetermined amount is pushed onto the brake member in the actuation of the friction brake, the closed front end of the abrasion detection member is worn and torn in contact with the brake member, and then the closed-end chamber is torn open. As a result, the pneumatic pressure detected by the pressure detecting means decreases and becomes equal to or lower than a predetermined pressure value. In response to this pressure decrease, alarming means ( for example, the alarming device 50 ) takes a warning action.

In this construction, the abrasion detection member, which detects the abrasion of the lining, is mounted in the lining member, and it detects the abrasion of the brake lining directly. In the present invention, the abrasion detection member is used not as the member by which an electrical change is detected for the detection of the abrasion, but as the means of detecting a change in the pneumatic pressure which is provided in the abrasion detection member. The abrasion detection member includes the closed-end chamber whose front end is closed, and the pneumatic pressure is provided in the closed-end chamber from the pneumatic pressure supply means. To detect the pneumatic pressure, the brake-lining abrasion detector includes the pressure detecting means. As the brake lining wears out, when the abrasion detection member is worn and torn, the closed front end of the closed-end chamber is opened, releasing the air. As a result, the pneumatic pressure decreases. The alarming means takes various warning actions in response to the decrease of the pneumatic pressure.

In the brake-lining abrasion detector according to the present invention, the abrasion detection member, which detects the abrasion of the brake lining, is mounted on the lining member, and it detects the abrasion of the brake lining directly. Therefore, the brake-lining abrasion detector according to the present invention is more accurate than those which detect the abrasion indirectly. Furthermore, the present invention exploits changes of air pressure for detecting the abrasion, so there is no need to provide electrical switches and electrical wiring near the wheels, which experience harsh vibrations. Therefore, the brake-lining abrasion detector according to the present invention can be implemented cost-effectively in a simple construction with a high reliability.

It is preferable that the brake-lining abrasion detector further comprise supply controlling means ( for example, the orifice 32 and the solenoid valve 33 described in the following section ) for the pneumatic pressure supply means. In this case, when the pneumatic pressure detected by the pressure detecting means decreases below a predetermined pressure, the alarming means can restrict or block the supply of air by the supply controlling means. In this way, air leak, which is wasteful, is prevented, and the compressed air in the air tank of the vehicle can be kept intact while the vehicle is parked. This arrangement is also advantageous for improving the accuracy of the detection.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only and thus are not limitative of the present invention.

FIG. 1A is a block diagram of a first embodiment of brake-lining abrasion detector according to the present invention, showing the condition of the detector before the wear of the brake lining reaches an abrasion limit.

FIG. 1B is a block diagram of the brake-lining abrasion detector, showing the condition after the wear of the brake lining has reached the abrasion limit.

FIG. 2 is an illustration showing the construction of an abrasion detection head, which is a component of the brake-lining abrasion detector.

FIG. 3A is a block diagram of a second and third embodiment of brake-lining abrasion detector according to the present invention, showing the condition of the detector before the wear of the brake lining reaches an abrasion limit.

FIG. 3B is a block diagram of the second and third embodiment of brake-lining abrasion detector, showing the condition after the wear of the brake lining has reached the abrasion limit.

FIG. 4 is an illustration of a drum brake which comprises a brake-lining abrasion detector according to the present invention.

### DESCRIPTION OF THE PREFERRED EMBODIMENTS

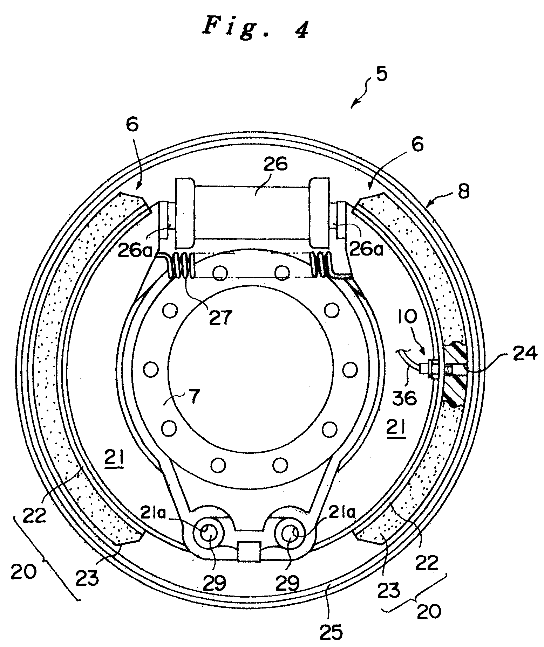

FIG. 4 shows an embodiment of drum brake which comprises a brake-lining abrasion detector according to the present invention. The drum brake 5 comprises a brake shoe unit 6 and a brake drum unit 8. The brake shoe unit 6 is retained by an anchor bracket 7, which is fixed on an axle housing ( not shown ), and the whole brake shoe unit 6 is covered with the brake drum unit 8, which is freely rotatable with respect to the anchor bracket 7. This brake is a so-called wedge brake, so a wheel cylinder ( also referred to as "actuator" ) 26 with a wedge is provided to push the brake shoes 20 of the brake shoe unit 6 onto the brake drum 25 of the brake drum unit 8, which is mounted on a wheel of the vehicle. Therefore, when the brake is not activated the brake drum unit 8 rotates with the wheel.

The brake shoe unit 6 comprises a pair of support arms 21 and the brake shoes 20, which are mounted on the support arms 21, respectively. The brake shoe unit 6 is fixed at a base end thereof pivotably on the anchor bracket 7 by anchor pins 29, each of which is inserted in a pin insertion hole 21a provided at the base end of a respective support arm 21. In this condition, the support arms 21 are pivotable in the right and left direction of the figure. Each brake shoe 20 comprises a support plate 22 made of a steel plate and a brake lining ( hereinafter referred to simply as "lining" ) 23, which is fixed on the support plate 22, for example, by means of rivets. A tension spring 27 is provided at the top ends of the brake shoes 20 to pull them toward each other. Therefore, in a normal condition, i.e., when the brake is released or not activated, the brake shoes 20 are retained at a position where they are swung inward by the tension spring 27 ( in other words, they are detached from the brake drum 25 ) .

Between the top ends of the brake shoes 20, mounted is the above mentioned wheel cylinder 26. The wheel cylinder 26 incorporates a pair of pistons ( also referred to as "plungers" ) 26a, which reciprocate to extend the cylinder rightward and leftward as shown in the figure. When the brake is activated, the above mentioned wedge ( not shown ), which is provided between the right and left pistons 26a, is inserted to move the right and left pistons 26a outward, extending the cylinder. As a result, the brake shoes 20 are swung outward away from each other about the anchor pins 29 against the tension of the spring 27.

Because the brake drum 25 is positioned around the brake shoes 20, when the brake shoes 20 are expanded outward by the activation of the brake as described above, the linings 23, which are attached around the brake shoes 20, are pushed onto the internal surface of the brake drum 25. The resultant frictional force generated therebetween reduces the rotational speed of the brake drum 25. In this way, a braking effect is achieved for the wheel ( not shown ) on which the brake drum 25 is mounted. By the way, each of the brake shoes 20 includes an abrasion detection head which is a component of the brake-lining abrasion detector. In addition, the drum brake 5 includes an automatic clearance adjuster which moves the linings 23 toward the brake drum 25 automatically to keep the distance between the internal surface of brake drum 25 and the lining 23 at constant as the wear of the linings 23 progresses. Various types of adjusting devices used for this purpose are well known, so no detailed description is given here.

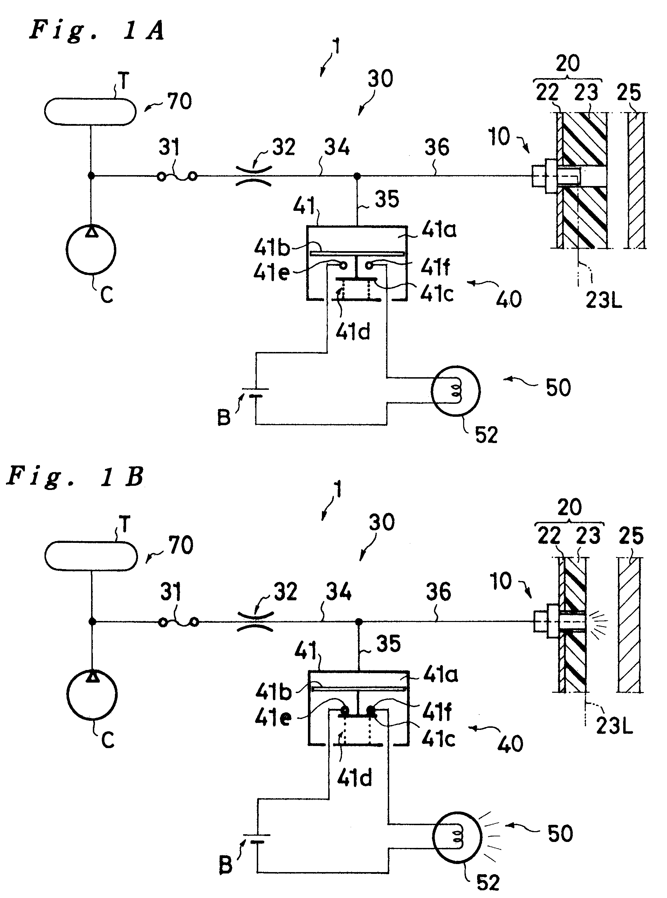

FIGS. 1A and 1B show a first embodiment of brake-lining abrasion detector according to the present invention. This brake-lining abrasion detector 1 comprises an abrasion detection head 10, a pneumatic pressure supply circuit 30, a pressure detector 40 and an alarming device 50. The abrasion detection head 10 is mounted in a brake shoe 20, and the pneumatic pressure supply circuit 30 provides the abrasion detection head 10 with compressed air. The pressure detector 40 detects the pressure supplied by the pneumatic pressure supply circuit 30 to the abrasion detection head 10, and the alarming device 50 alarms when the pressure of the air detected by the pressure detector 40 decreases and becomes equal to or less than a predetermined value.

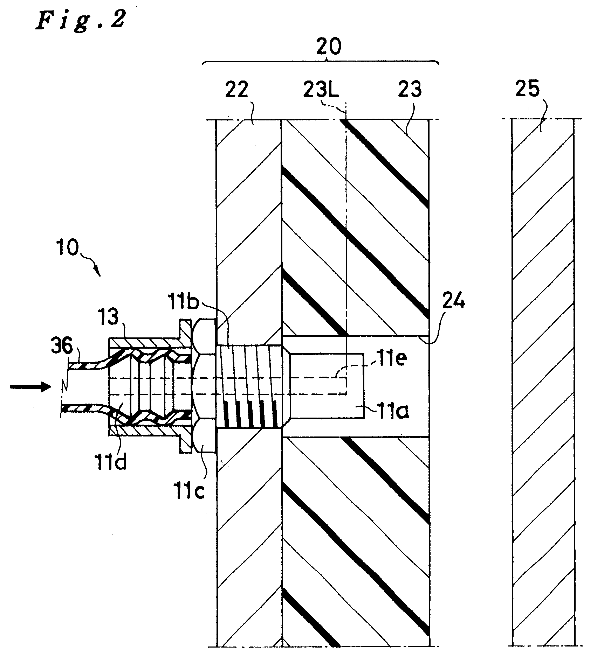

As shown in detail in FIG. 2, the abrasion detection head 10 is mounted in the brake shoe 20, which comprises a support plate 22 made of a steel plate and a lining 23 fixed on the support plate 22 as mentioned above. A head mounting hole 24 is provided through the support plate 22 and the lining 23 of the brake shoe 20, and the part of the head mounting hole 24 located in the support plate 22 is threaded for the mounting and fixing of the abrasion detection head 10.

The abrasion detection head 10 comprises a connector head 11 and a sleeve 13. The sleeve 13 is used for fixing a detection tube 36, which is connected to the connector head 11. This connector head 11 comprises an abrasion end lla, a threaded portion 11b, a hexagonal body portion 11c and a tube connector lid. The abrasion end 11a extends in the head mounting hole 24 when the connector head 11 is mounted on the brake shoe 20, and the threaded portion llb is screwed and fixed in the threaded part of the support plate 22. The tube connector lid is used for connecting the detection tube 36 to the connector head 11, in which a closed-end chamber lie is provided extending from the rear end of the tube connector lid toward the front end of the abrasion end 11a.

The connector head 11 is mounted on the brake shoe 20 in the following manner. First, the abrasion end lla of the connector head 11 is inserted into the head mounting hole 24 from the rear side ( the left side of the brake shoe 20 in FIG. 2 ) of the brake shoe 20, and then the threaded portion 11b is screwed into the threaded part of the support plate 22 and fixed tightly by turning the hexagonal body portion 11c with a wrench until the seating face of the hexagonal body portion 11c comes into contact with the support plate 22. In this mounted condition, the front end of the closed-end chamber 11e, which is provided in the connector head 11, is located at a critical abrasion point 23L which is predetermined for the lining 23. The critical abrasion point 23L is indicated by a two-dot chain line in FIG. 2.

Onto the tube connector lid of the connector head 11, which is mounted on the brake shoe 20, an end of the detection tube 36 is pushed to cover the tube connector lid, and then the sleeve 13, which is mounted over the detection tube 36 beforehand and positioned leftward, is now shifted rightward and pressed onto the end of the hexagonal body portion 11c to squeeze and fix the detection tube 36 on the tube connector lid.

The abrasion detection head 10, which is connected to the detection tube 36, is a component of the pneumatic pressure supply circuit 30, which takes in compressed air through a line 31 from an air supply source 70 provided in the vehicle. The air supply source 70 comprises an air compressor C and a tank T, and the compress air produced at the source has a pressure of a few hundred kiloPa (a few kgf/cm²). The pneumatic pressure supply circuit 30 controls the flow of the compressed air coming through the line 31 with an orifice 32 and directs the air through a line 34 and the detection tube 36 to the abrasion detection head 10. The line 34 has a branch line 35 which leads to a pressure switch 41.

The pressure switch 41 comprises an air chamber 41a, which is connected to the line 35, a piston 41b, a switch plate 41c, a spring 41d, and electric contacts 41e and 41f. The switch plate 41c is combined to the piston 41b, and the spring 41d pushes the piston 41b against the force generated from the pressure in the air chamber 41a. As shown in the figure, to the contacts 41e and 41f, connected is the alarming device 50, which comprises a battery B and a warning lamp 52.

With this brake-lining abrasion detector 1, the brake shoe 20, in which the abrasion detection head 10 is mounted, faces the brake drum 25. When the wheel cylinder is extended to push the linings 23 onto the brake drum 25, a frictional force is generated between the external surfaces of the linings 23 and the internal surface of the brake drum 25, as mentioned above, so the rotation of the brake drum 25 is controlled. As this brake operation is repeated, the linings 23 are worn gradually, and the abrasion of the linings reaches the critical abrasion point 23L at last.

In the abrasion process, while the linings 23 are not yet worn out to the critical abrasion point 23L, the tip of the detection head 10 is not in contact with the brake drum 25. Therefore, the pressure of the pneumatic pressure supply circuit 30 is maintained at the same pressure ( high pressure ) as the pressure being supplied, and the pressure switch 41 remains in the condition shown in FIG. 1A, in which the piston 41b is pushed downward by the pressure of the line, so the contacts 41e and 41f are maintained open. In this condition, the pressure detection circuit of the alarming device 50 is open, so the warning lamp 52 remains in its off condition.

As the brake operation is repeated further, and the degree of the abrasion of the linings 23 approaches the critical abrasion point 23L, the abrasion end 11a of the connector head 11 comes into contact with the brake drum 25. Because the connector head ( head portion ) 11 is made of an industrial material which is softer than the brake drum 25, for example, a soft alloy such as a copper alloy or an aluminum alloy or a heat-resistant resin such as a fluororesin, a polyphenylene sulfide (PPS) or a polyamide imide ( PAI ), the connector head 11 is worn away together with the linings 23. When the abrasion of the linings 23 reaches the critical abrasion point 23L, the closed-end chamber 11e, which is formed in the connector head 11, is exposed, and the tip of the pneumatic pressure supply circuit 30, which has been closed until this point, is opened.

As shown in FIG. 1B, when the closed end of the connector head 11 is opened in this way, the air in the pneumatic pressure supply circuit 30 starts to escape through the abrasion end lla of the connector head 11. As a result, the pressure of the lines connected with the detection tube 36, which pressure has been kept at a constant pressure until this point, starts to decrease. As the pressure of the air chamber 41a of the pressure switch 41, into which the compressed air is supplied through the line 35, decreases, the piston 41b and the switch plate 41c, which is connected thereto, are pushed upward by the prevailing force of the spring 41d as shown in the figure, to close the electrical circuit at the contacts 41e and 41f with the switch plate 41c. By the way, the pressure of the lines 34, 35 and 36 decreases at a certain rate which is determined basically by the ratio of the diameter of the orifice 32 to that of the dosed-end chamber 11e (opening). Therefore, the pressure switch 41 is set appropriately at a threshold which will achieve the closing of the circuit when the pressure decrease of the line 35 is caused by the opening of the closed-end room lie as a result of the wear of the abrasion end 11a.

When the contacts 41e and 41f are closed by the shift of the switch plate 41c, the electrical circuit of the alarming device 50 is closed. As a result, power from the battery B is supplied to the warning lamp 52, lighting the lamp 52 to warn the driver of the condition that the linings 23 have reached their abrasion limit. In this way, the driver can know that the brake linings 23 have reached their abrasion limit, without dismounting and investigating the brakes by himself or any other person. Therefore, the present invention provides means for preventing an unnoticed decrease of the braking force, which will occur in connection with the lining abrasion, and thereby improves the safety of the vehicle.

An orifice 32 is provided in the pneumatic pressure supply circuit 30 and the diameter of the closed-end chamber 11e, which is provided in the connector head 11, is relatively small with a dimension of ⌀ 2mm. Because of this design, the flow of air through the opening end of the abrasion end lla is limited to a minute level. Furthermore, the brake-lining abrasion detector 1 may be arranged to receive the required pneumatic pressure from a pneumatic circuit which is used for the actuation of the parking brake as the air supply source 70 available in the vehicle. In this case, the pneumatic pressure can be available both for the pneumatic pressure supply circuit 30 and for the pneumatic circuit used for the actuation of the parking brake while the vehicle is driving. This pneumatic system can be also arranged such that when the parking brake is operated, the pneumatic circuit is isolated before the pneumatic pressure is purged from the pneumatic circuit. In this way, wasteful air leak from the air tank T of the vehicle is prevented while the vehicle is parked.

Because the brake-lining abrasion detector 1 detects the abrasion of the linings directly from the change of the pneumatic pressure, in comparison with other indirect type detectors, the detector according to the present invention is simple in construction and accurate in detection. In the detector according to the present invention, the pressure switch, which functions to detect the abrasion, may be mounted on the vehicle body, away from the wheels, which experience harsh vibrations, and then the pressure switch may be connected through a heat-resistant elastic tube to the connector head, which is mounted in the drum brake. With this construction, the detector according to the present invention is less prone to experience electrical problems such as failures of the electrical parts and accidental cuts of the electrical wiring than prior-art detectors. In this detector, if the tubing is damaged, then this damaged condition is also noticeable from the lighting of the warning lamp. This arrangement is useful to construct a fail-safe system. Thus, the present invention successfully provides a low-cost abrasion detector which is simple in construction but is highly reliable in detection.

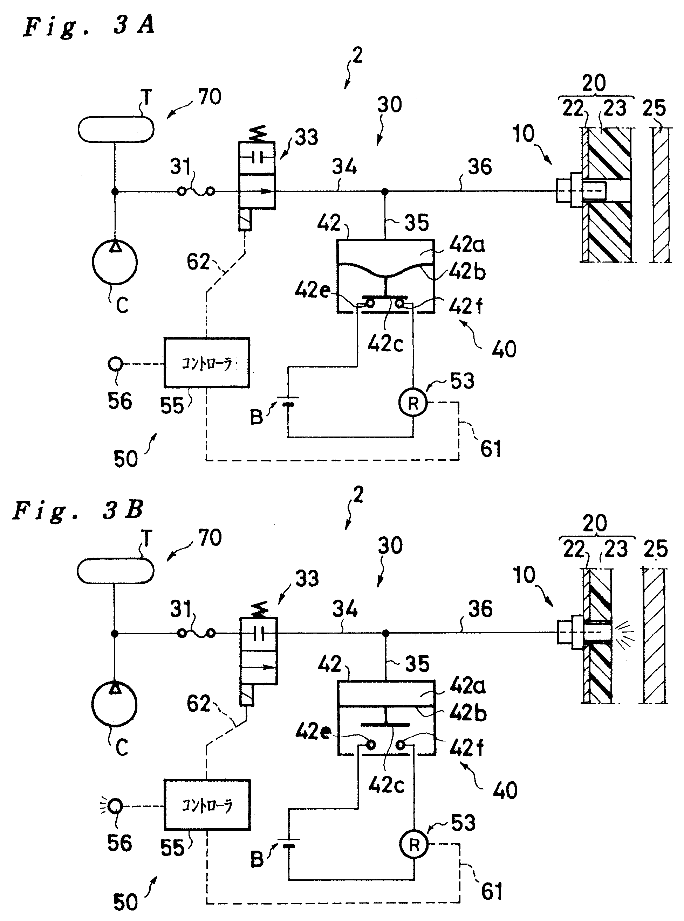

FIGS. 3A and 3B show a second embodiment of brake-lining abrasion detector according to the present invention. This abrasion detector 2 comprises a abrasion detection head 10, a pneumatic pressure supply circuit 30, a pressure detector 40 and an alarming device 50 like the above mentioned first embodiment, so the basic construction of the abrasion detector 2 is similar to that of the above described abrasion detector 1. Also, the abrasion detection head 10 is identical to that of the first embodiment. Therefore, the components of the abrasion detector 2 which are identical to those of the first embodiment are given the same reference numbers, and the description of such components is not repeated here. Therefore, components which are different from those of the first embodiment are explained mainly.

In the pneumatic pressure supply circuit 30, the compressed air supplied from the air supply source 70 through the line 31 is led through a solenoid valve 33 to the line 34. The solenoid valve 33 is of a normally closed type as shown in the figure, and the valve includes an orifice which has the same diameter as the orifice 32 of the first embodiment. The pressure switch 42 of the pressure detector 40 is of a diaphragm type and includes an air chamber 42a partitioned by a diaphragm 42b, whose circumference is attached to the internal wall of the pressure switch 42. By the elastic deformation of the diaphragm 42b, a switch plate 42c attached to the diaphragm is shifted to close or open the electrical contacts 42e and 42f of the switch. The pressure switch 42 is a switch which connects the electrical contacts to close the circuit when the pressure in the air chamber 42a increases to a certain level ( opposite logic of the above embodiment). The alarming device 50 comprises a controller 55, a warning indicator 56 and a relay 53. The controller 55 controls the lining abrasion detector, and the warning indicator 56 is used for alarming the driver. The relay 53 is used to relay the information that the pressure switch 42 is open or closed.

In the brake-lining abrasion detector 2, when the key switch of the vehicle is turned on, or when the internal pressure of the air tank T reaches a predetermined value, the controller 55 opens the solenoid valve 33 to supply the compressed air into the pneumatic pressure supply circuit 30. As shown in

FIG. 3A, when the abrasion detection head 10 ( connector head 11 ) is still away from the brake drum 25 with little abrasion of the connector head 11, it remains in the same condition as shown in FIG. 1A. In this condition, the contacts 42e and 42f of the pressure switch 42 are maintained closed by the deformation of the diaphragm 42b, which deformation is caused from the pressure in the line of the pneumatic pressure supply circuit 30 that is as high as the pressure supplied from the source. In this closed circuit, the relay 53, which is arranged in the pressure detection circuit, receives power from the battery B and is electromagnetically energized, so the relay 53 is kept in its on condition.

The signal of the relay 53 is communicated through a signal line 61 to the controller 55. As long as the controller 55 detects the energized state of the relay 53, it takes no warning action because this condition of the relay 53 means that the pressure in the lines 34, 35 and 36 is higher than a predetermined value. This, in turn, indicates that the abrasion end 11a of the connector head 11 has not worn out to a point where the end of the line opens as described above, i.e., the linings 23 are not yet worn out to the critical abrasion point 23L.

When the linings 23 are worn to the abrasion limit, the abrasion end 11a of the connector head 11 is also worn out, and the closed-end chamber lie is exposed. When the front end of the pneumatic pressure supply circuit 30 is opened, the compressed air is released, resulting in a pressure decrease. When the pressure of the line of the pneumatic pressure supply circuit 30, which pressure has been kept at constant, decreases to a certain point, the contacts 42e and 42f of the pressure switch 42 are opened as shown in FIG. 3B. The power supply line from the battery B to the relay 53, which is provided for the pressure detection circuit, is cut open, so the relay 53 is turned off.

The controller 55 detecting the turning off of the relay 53 takes a warning action because this condition of the relay 53 means that the compressed air is leaking from the front end of the line located in the abrasion end lla of the connector head 11, which has been scraped open in the actuation of the brake. This warning action includes the lighting of the warning indicator 56 to inform the driver that the linings 23 have worn out to the critical abrasion point 23L, and the actuation of the solenoid valve 33 to close the supply line of the compressed air for the purpose of stopping the air leak, which is no longer necessary.

As the driver is notified of the condition that the wear of the linings 23 has reached the critical abrasion point 23L, he or she can take an appropriate action to prevent the drum brakes from losing their braking force, which may occur if the abrasion is left unnoticed. In this way, the present invention secures the safety of the vehicle. In addition to the above mentioned advantages of the first embodiment, this second embodiment offers another advantage. As the solenoid valve 33 of the abrasion detector 2 is closed after the detection of the worn condition of the linings 23, the air leak is stopped notwithstanding whether the vehicle is driving or not. Furthermore, in the abrasion detector 2, if any damage or malfunction happens not only with the pneumatic line but also with the pressure switch 42, the pressure detection circuit and the signal line 61, the controller 55 can take a warning action, for example, by lighting the warning indicator 56, because the signal line 61 is inherently cut open in response to the occurrence of abnormality. Therefore, this arrangement makes it possible to construct a fail-safe system which includes a pneumatic circuit as well as an electrical circuit.

Now, a description is made of a third embodiment of brake-lining abrasion detector according to the present invention. This abrasion detector is similar to the second embodiment. In the third embodiment, the diameter of the orifice of the solenoid valve 33 is made larger, and the threshold of the pressure switch 42 is set to a lower pressure value. In this case, at first, the controller 55 opens the solenoid valve 33 to let the compressed air into the lines 34, 35 and 36. When the pressure in the lines reaches a predetermined value, the controller 55 closes the solenoid valve 33 to stop the air supply and waits to detect a pressure change thereafter.

The pressure in the lines which are blocked from the supply source decreases abruptly when the front end of the abrasion detection head 10 is scraped off as described above or gradually if there is a little leak. After a certain time has passed, if the pressure has decreased to the predetermined value, the pressure switch 42 is turned off, i.e., the contacts of the switch are opened. The controller 55 measures this time period, i.e., the time from the closing of the solenoid valve 33 to the turning off of the pressure switch 42.

The controller 55 repeats this measurement a plurality of times and calculates an average for the measured values. If the averaged time period is equal to or shorter than a predetermined value ( i.e., the decrease of the pressure takes a relatively short time), then the condition is considered as the abrasion detection head 10 has worn. In this case, the controller 55 takes a warning action. On the other hand, if the averaged time is longer than the predetermined value, then the condition is considered as a minuscule leak, so the controller 55 takes no warning action. Alternatively, depending on the length of the averaged time, the warning message can be varied as follows: "Critical abrasion point has reached.", "Inspect air leak.", "Permissible minuscule leak", etc.

In addition to the above mentioned advantages of the second embodiment, this embodiment of brake-lining abrasion detector offers another advantage. In this abrasion detector, the pneumatic pressure supply circuit 30 is not required to be provided continuously with the compressed air. The solenoid valve 33 is turned off after supplying the required compressed air, so the consumption of electricity as well as the compressed air is comparatively small. Therefore, the electricity and the compressed air available in the vehicle can be distributed appropriately and efficiently to other systems which operate the vehicle. Furthermore, the above mentioned averaging process may be repeated a number of times to avoid any wrong detection or error so as to improve accuracy.

In the above described embodiments, the connector head 11, which is screwed into the brake shoe 20, is used as the abrasion detection head 10. However, the present invention is not limited to this example. The abrasion detection head can be provided in other forms. For example, a stud type detection head may be press-fit directly into the lining 23, or the abrasion detection head may be formed in one body with the support plate 22. Furthermore, for a small vehicle which does not carry an air supply source 70, the brake-lining abrasion detector can be applied together with a small air compressor. In this case, this compressor is used exclusively for the operation of the detector. If the brake-lining abrasion detector is provided in a form of the second or third embodiment, then it may be arranged without the solenoid valve 33, so the controller 55 should control directly the start and stop of the operation of the compressor in addition to taking a warning action. Also, in the above examples, the pressure switch 42 is used to function as the pressure detector 40. Instead of the pressure switch 42, a pressure sensor may be applied, and the controller 55 should control the solenoid valve etc. in response to the pressure change detected by this sensor.

Furthermore, in the above description of the present invention, the embodiments are applied to the drum brake 5. However, the application of the present invention is not limited to drum brakes. The present invention can be applied also to other types of friction brakes ( for example, a disc brake ) with the same construction as described above.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### RELATED APPLICATIONS

This application claims the priority of Japanese Patent Application No.11-329203 filed on November 19, 1999, which is incorporated herein by reference.

## Claims

1. A brake-lining abrasion detector for detecting wear of a brake lining in a friction brake (5) that comprises a lining member (20) and a brake member (25), said lining member being provided with said brake lining (23), which is pushed onto said brake member when said friction brake is actuated;
said brake-lining abrasion detector comprising an abrasion detection member (10) and alarm means (50), *characterised in that* the abrasion detection member (10) includes a closed-end chamber (11e) extending from a rear end thereof toward a closed front end, said abrasion detection member being mounted on said lining member and extending from a rear side of said brake lining toward a surface of said brake lining that meets said brake member; said closed front end of said abrasion detection member being worn and torn in contact with said brake member when said brake lining, after having been worn out by an amount more than a predetermined amount, is pushed onto said brake member;
pneumatic pressure supply means (30, 70) provides a pneumatic pressure in said closed-end chamber through said rear end;
pressure-detecting means (40) detects said pneumatic pressure in said closed-end chamber; and
said alarm means takes a warning action when said pneumatic pressure detected by said pressure detecting means becomes equal to or lower than a predetermined pressure value, which pressure decrease is caused by said wear and tear that has opened said closed-end chamber in the actuation of said friction brake.

2. A brake-lining abrasion detector as claimed in claim 1, wherein when said abrasion detection member (10) is mounted on said lining member (20), extending from the rear side of said brake lining (23) toward the surface of said brake lining that meets said brake member (25), a front end of said closed-end chamber (11e) is positioned at a critical abrasion point (23L) which is determined for said brake lining of said lining member.

3. A brake-lining abrasion detector as claimed in claim 1 or 2, wherein a head portion (11) which defines said closed-end chamber in said abrasion detection member is made of a soft alloy such as a copper alloy or an aluminum alloy or a heat-resistant resin such as a fluororesin, a polyphenylene sulfide (PPS) or a polyamide imide (PAI).

4. A brake-lining abrasion detector as claimed in claim 1, 2 or 3 wherein:
said pressure detecting means (40) comprises a piston (41b), a spring (41d) and an electrical switch (41c, 41e, 42f), said piston being exposed to said pneumatic pressure of said closed-end chamber and being pushed and shifted by a force generated from said pneumatic pressure, said spring biasing said piston in an opposite direction against said force generated from said pneumatic pressure, and said electrical switch being actuated by said piston being shifted by a prevailing biasing force of said spring over a distance equal to or more than a predetermined distance when said pneumatic pressure becomes equal to or lower than said predetermined value; and
when said electrical switch is actuated, said alarming means (50) takes a warning action.

5. A brake-lining abrasion detector as claimed in claim 4, further comprising an electrical circuit (50) which lights a warning lamp (52) as a warning action when said electrical switch is closed.

6. A brake-lining abrasion detector as claimed in claim 1, wherein:
said pressure detecting means comprises a diaphragm (42b) and an electrical switch (42c, 42e, 42f), said diaphragm being exposed to said pneumatic pressure of said closed-end chamber and being pushed and deformed by a force generated from said pneumatic pressure and said electrical switch (42c) being connected to a portion of said diaphragm which portion is deformed as mentioned above;
said electrical switch is actuated by said deformation of said diaphragm, which deformation occurs when said pneumatic pressure of said closed-end chamber becomes equal to or lower than said predetermined value; and
when said electrical switch is actuated, said alarming means (50) takes a warning action.

7. A brake-lining abrasion detector as claimed in claim 6, further comprising an electrical circuit (50) which lights a warning lamp (56) as a warning action when said electrical switch is closed.

8. A brake-lining abrasion detector as claimed in any one of the preceding claims, wherein:
an orifice (32) is provided on a pneumatic pressure supply line (31) which leads said pneumatic pressure from said pneumatic pressure supply means (70) into said closed-end chamber (lie); and
said pressure detecting means (40) is positioned on said pneumatic pressure supply line between said orifice and said closed-end chamber.

9. A brake-lining abrasion detector as claimed in any one of the preceding claims, wherein;
said pneumatic pressure supply means comprises a pneumatic pressure supply source (70) which is used also for releasing a parking brake of a vehicle;
while said parking brake is actuated, said pneumatic pressure is not supplied into said closed-end chamber; and
only while said parking brake is released, said pneumatic pressure is supplied into said closed-end chamber.

10. A brake-lining abrasion detector according to any one of the preceding claims, wherein supply controlling means (33) which controls the supply of said pneumatic pressure is provided on a pneumatic pressure supply line (34) which leads said pneumatic pressure from said pneumatic pressure supply means (70) into said closed-end chamber.

11. A brake-lining abrasion detector as claimed in claim 10, wherein said supply controlling means comprises a normally closed type solenoid valve (33), which is provided on said pneumatic pressure supply line, which leads said pneumatic pressure from said pneumatic pressure supply means (70) into said closed-end chamber.

12. A brake-lining abrasion detector as claimed in claim 11, wherein said solenoid valve (33) has an orifice.

13. A brake-lining abrasion detector as claimed in claim 11 or 12, wherein said pressure detecting means (40) is positioned on said pneumatic pressure supply line (34, 36) between said solenoid valve (33) and said closed-end chamber (11e).

14. A brake-lining abrasion detector as claimed in claim 12 or 13 wherein:
said solenoid valve (33) is opened when said pneumatic pressure of said pneumatic pressure supply means (70) has increased to a predetermined pressure; and
said solenoid valve is closed after said alarming means (50) has taken a warning action.

15. A brake-lining abrasion detector as claimed in claim 10, wherein:
after said pneumatic pressure is provided in said closed-end chamber (lie) by opening said supply controlling means (33), said supply controlling means is closed; and
then, said alarming means (50) takes a warning action in correspondence to a rate at which said pneumatic pressure of said closed-end chamber decreases.

16. A brake-lining abrasion detector as claimed in claim 15, wherein said supply controlling means comprises a normally closed type solenoid valve (33), which is provided on said pneumatic pressure supply line, which leads said pneumatic pressure from said pneumatic pressure supply means (70) into said closed-end chamber.
